# EUROPEAN PATENT APPLICATION

(11) **EP 4 492 874 A1**
(43) Date of publication of application: **15.01.2025**
(21) Application number: 23184536.3
(22) Date of filing: 10.07.2023
(51) Int. Cl.: H04W 48/18

(54) **HYBRID RADIO ACCESS NETWORK AND OPERATION METHOD**

(71) Applicant: Deutsche Telekom AG, 53113 Bonn (DE)
(72) Inventor: UHL, Daniel, 53117 Bonn (DE); VOGT, Achim, 53175 Bonn (DE)
(74) Representative: RDL Patentanwälte PartG mbB

(57) **Abstract**

A method for operating a radio access network, RAN, wherein a radio unit, RU, of the radio access network and/or a distributed unit, DU, of the radio access network is caused to shut down; a hybrid radio access network and a computer program product.

## Description

The invention relates to a method for operating a radio access network, RAN, wherein a radio unit, RU, of the radio access network and/or a distributed unit, DU, of the radio access network shut down. The invention further relates to a hybrid radio access network and a computer program product.

The radio access network usually comprises a plurality of radio units. Each radio unit creates a radio cell providing a wireless connectivity, i.e., is a radio access point for a mobile device located within the radio cell. The radio access network may be configured as a so-called virtual radio access network. The mobile device may be configured as a smartphone, a tablet, a notebook and the like and commonly called user equipment, UE.

The radio access network also comprises a plurality of distributed units. Each radio unit is connected to a distributed unit via a so called fronthaul. Each distributed unit may be connected to by a plurality of radio units. The fronthaul may be configured as a wire, i.e., as a cable or as a glass fiber, or wireless.

The radio cells created by the radio access network are possibly arranged to completely cover a territory of a state in order to possibly avoid any dead zone with no wireless connectivity. A mobile device moving from a first radio cell to a partially overlapping adjacent second radio cell is subject to a so called handover procedure, i.e., the radio access network transfers the wireless connection of the mobile device transparently from a first radio unit creating the first radio cell to a second radio unit creating the second radio cell.

A mobile device moving from a first territory covered by a first radio access network to a second territory covered by a second radio access network is subject to a so called roaming procedure, the first radio access network transfers the wireless connection of the mobile device transparently from a first radio unit of the first radio access network to a second radio unit of the second radio access network. The first territory and the second territory may be adjacent territories of a first state and a second state, respectively. However, the first territory and the second territory may also be identical, i.e., a territory of a single state.

It is obvious that each radio cell of the radio access network has to be permanently available in order to provide the wireless connectivity at any time and at any location of the covered territory. The permanent availability implies a continuous operation of the radio unit creating the respective radio cell and the distributed unit connected to by the radio unit. However, operating each radio unit and each distributed unit requires a lot of electric energy.

It is, therefore, an object of the invention to suggest a method for operating a radio access network allowing for an electric energy consumption of the radio access network to be lower than a minimum electric energy required for the complete and permanent availability. Further objects of the invention are providing a hybrid radio access network and a computer program product.

A first aspect of the invention is a method for operating a radio access network, RAN, wherein a radio unit, RU, of the radio access network and/or a distributed unit, DU, of the radio access network is caused to shut down. Shutting down comprises switching off completely and changing to a power saving mode. In the former case the radio access network does not provide any wireless connectivity within the radio cell created by the radio unit. In the latter case the radio access network provides a restricted wireless connectivity within the radio cell created by the radio unit.

According to the invention, a control module of a centralized unit, CU, of a radio access network, RAN, determines a service demand of a mobile device connected to a radio unit, RU, of the radio access network and registered with the control module; the control module determines a service capacity of a non-terrestric telecommunication network, NTN, connected to the radio access network via an application programming interface, API, and connected to by the mobile device; and the control module causes the radio unit and/or a distributed unit, DU, of the radio access network to shut down and the mobile device to be transferred to the non-terrestric telecommunication network when the determined service capacity exceeds the determined service demand.

The control module combines the radio access network and the non-terrestric telecommunication network to form a hybrid radio access network, i.e., a single logical radio access network. The application programming interface allows for the control module to communicate with the non-terrestric telecommunication network, i.e. to receive data from the non-terrestric telecommunication network and transmit data to the non-terrestric telecommunication network.

The mobile device is wirelessly connected both to the radio access network and to the non-terrestric telecommunication network. Both wireless connections may be simultaneous, e.g., by means of a multipath technology or a Multi-Subscriber Identity Module, SIM. The wireless connections may also be subsequent, e.g., the wireless connection to the radio access network is roamed to the wireless connection to the non-terrestric telecommunication network. The wireless connection to the non-terrestric telecommunication network fully replaces the wireless connection to the radio access network when the service capacity of the non-terrestric telecommunication network at least meets the service demand of the mobile device. The shut down of the radio unit does not leave the mobile device without a wireless connection. In other words, the connectivity provided by the non-terrestric telecommunication network fully compensates the unavailability of the radio access network. The shut down of the radio unit and the transfer of the mobile device to the non-terrestric telecommunication network is transparent to a user of the mobile device.

The distributed unit connected to by the radio unit may also shut down when each radio unit connected to the distributed unit has shut down. The shut down radio unit and/or distributed unit does not consume any electric energy or at least consumes less electric energy. Accordingly, an electric energy consumption of the radio access network is lowered below a minimum electric energy consumption corresponding to a complete and permanent availability.

Determining the service capacity may comprise verifying the mobile device to be connected to the non-terrestric telecommunication network, receiving NTN metrics from the non-terrestric telecommunication network, the NTN metrics comprising a bandwidth, a throughput, a latency, a jitter and/or an error rate, generating a service capacity profile of the non-terrestric telecommunication network depending on the received NTN metrics and deriving the service capacity from the generated service capacity profile. The verification ensures that the mobile device is not left without a wireless connectivity in case the radio unit shuts down. The service capacity profile summarizes and details a current service capacity of the non-terrestric telecommunication network in the radio cell created by the radio unit. The detailed current service capacity is determined by the listed items of the NTN metrics. The list is exemplary and not exhaustive. The service capacity profile allows for deriving the service capacity currently provided by the non-terrestric telecommunication network.

Determining the service demand may comprise receiving current UE metrics from the mobile device or from the radio access network and/or predict future UE metrics, generating a service demand profile of the mobile device depending on the received current UE metrics and the predicted future UE metrics and deriving the service demand from the generated service demand profile. The UE metrics may comprise each of the items listed for the NTN metrics. The current UE metrics are transmitted by the mobile device. The future UE metrics are predicted by the control module. The service demand profile allows for deriving the current and future service demand of the mobile device.

The future UE metrics may be predicted depending on historic data concerning the mobile device, a time of day, a position of the mobile device, a user of the mobile device and/or an event related to the mobile device. The listed items vary over time and may affect the UE metrics and, accordingly, the service demand of the mobile device. Again, the list is exemplary and not exhaustive.

The control module preferably causes the radio unit and/or the distributed unit to restart and the mobile device to be transferred to the radio access network when the determined service demand exceeds the determined service capacity, i.e., of the non-terrestric telecommunication network. The wireless connection to the radio access network replaces the wireless connection to the non-terrestric telecommunication network when the service capacity of the non-terrestric telecommunication network does not meet the service demand of the mobile device. The restart of the radio unit does not leave the mobile device without a sufficient wireless connection. In other words, the insufficient wireless connectivity provided by the non-terrestric telecommunication network is compensated by the availability of the radio access network. The restart of the radio unit and the transfer of the mobile device to the radio access network is transparent to a user of the mobile device.

The control module advantageously transmits a message to the mobile device, the message indicating an estimated time remaining until the radio unit and/or the distributed unit have restarted. The message may be transmitted by a short message service, SMS, provided by the radio access network. Due to the message a user of the mobile device knows a duration of an insufficient wireless connectivity.

Preferably, the control module iteratively determines the service capacity and the service demand. Both the service capacity of the non-terrestric telecommunication network and the service demand of the mobile device may vary over time. The iterative determination ensures that the radio unit and/or the distributed unit shut down as often as possible and restart only if necessary. Accordingly, the electric energy consumption of the radio access network is further reduced.

The control module may determine service demands of a plurality of mobile devices connected to the radio unit or a plurality of radio units and registered with the control module. The control module simultaneously controls a plurality of wireless connections to the radio access network and the non-terrestric telecommunication network.

Causing the mobile device to be transferred comprises transmitting a transfer request to the mobile device as a cell broadcast. Upon receiving the cell broadcast, the mobile device initiates the transfer to the non-terrestric telecommunication network or to the radio access network, respectively.

Performing a handover procedure or a roaming procedure may comprise transferring the mobile device. The handover procedure allows the mobile device for moving from a first radio cell to a partially overlapping adjacent second radio cell. The roaming procedure allows the mobile device for moving from a radio cell of a first radio access network to a partially overlapping adjacent radio cell of a second radio access network. Each change of radio cell may allow the radio cell and/or the distributed unit to shut down or require the radio cell and/or the distributed unit to restart.

A second aspect of the invention is a hybrid radio access network, RAN, comprising a radio access network with a distributed unit, DU, a radio unit, RU, and a centralized unit, CU, with a control module; a non-terrestric telecommunication network, NTN; and an application programming interface, API, connecting the radio access network to the non-terrestric telecommunication network. The hybrid radio access network comprises the radio access network and the non-terrestric telecommunication network transparently coupled to each other by means of the application programming interface.

According to the invention, the hybrid radio access network is configured to carry out a method according to an embodiment of the invention. The inventive method allows an electric energy consumption for the radio access network which is lower than a minimum electric energy consumption required for the complete and permanent availability.

The non-terrestric telecommunication network may be configured as a satellite network comprising a satellite core network, a satellite gateway, a satellite backhaul connecting the satellite gateway to the satellite core network, a plurality of satellites and a satellite fronthaul connecting each satellite to the satellite gateway. The satellite network is available and adequate for extending the radio access network.

The radio access network may further comprise a fronthaul connecting the radio unit to the distributed unit, a midhaul connecting the distributed unit to the centralized unit, a core network and/or a backhaul, the backhaul connecting the centralized unit to the core network. The listed components usually form part of the radio access network. The fronthaul, the midhaul and the backhaul may be configured as wires, i.e., as electric cables or as glass fibers. The fronthaul may also be configured wireless.

The control module preferably comprises an artificial neural network for predicting future UE metrics of a mobile device and/or a service capacity of the non-terrestric telecommunication network. The artificial neural network is configured for recognizing patterns in historic data concerning the mobile device.

The radio unit preferably comprises a 5G base transceiver station, BTS, or a stack of a plurality of base transceiver stations of different generations. The radio unit further comprises an antenna or a plurality of antennas. The different generations may comprise 2G, 3G, 4G and, of course, any future generation of a radio access network.

A third aspect of the invention is a computer program product, comprising a digital storage medium storing a program code. The digital storage medium comprises a compact disc, CD, a digital versatile disk, DVD, a universal serial bus, USB, stick, a random access memory, RAM, chip, a hard drive, HD, a cloud storage and the like.

According to the invention, the program code causes a computing device to carry out a method according to an embodiment of the invention as the control module together with the radio unit, the distributed unit, the non-terrestric telecommunication network and a mobile device when being executed by a processor of the computing device. A centralized unit of a radio access network, as the computing device, allows an electric energy consumption for the radio access network which is lower than a minimum electric energy consumption required for the complete and permanent availability.

An essential advantage of the inventive method is that an energy consumption of the radio access network is further reduced. The resulting energy consumption is lower than a minimum electric energy consumption required for the complete and permanent availability without adversely affecting a wireless connectivity for mobile devices.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.

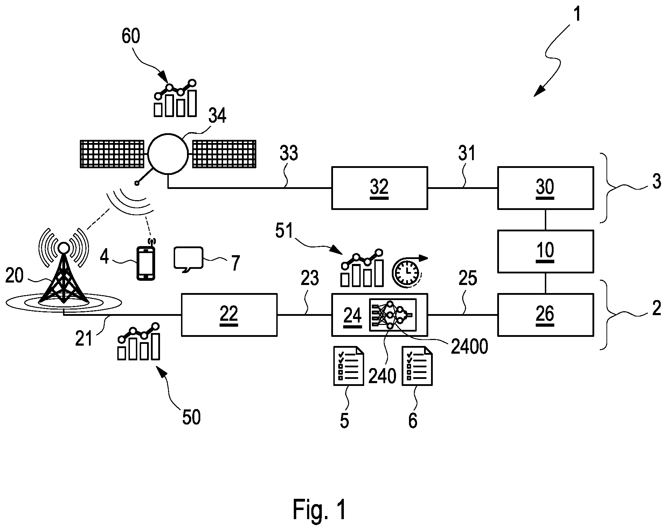

- Fig. 1: schematically shows a hybrid radio access network according to an embodiment of the invention.

Fig. 1 schematically shows a hybrid radio access network 1 according to an embodiment of the invention. The hybrid radio access network, hybrid RAN, 1 comprises a radio access network 2 with a distributed unit, DU, 22 and a radio unit, RU, 20. The radio unit 20 may comprise a 5G base transceiver station, BTS, or a stack of a plurality of base transceiver stations of different generations, e.g., 2G, 3G, 4G, 5G.

The radio access network 2 further comprises a centralized unit, CU, 24 with a control module 240. The control module 240 may comprise an artificial neural network 2400 for predicting future UE metrics 51 of a mobile device 4 and/or a service capacity of a non-terrestric communication network 3 (see below). The control module 240 may be implemented on the centralized unit 24 by means of a computer program product.

The computer program product comprises a digital storage medium storing a program code. The program code causes a computing device, the centralized unit 24 herein, to carry out a method according to an embodiment of the invention as the control module 240 together with the radio unit 20, the distributed unit 22, the non-terrestric telecommunication network 3 and a mobile device 4 when being executed by a processor of the computing device.

The radio access network 2 preferably further comprises a fronthaul 21 connecting the radio unit 20 to the distributed unit 22, a midhaul 23 connecting the distributed unit 22 to the centralized unit 24, a core network 26 and/or a backhaul 25, the backhaul 25 connecting the centralized unit 24 to the core network 26.

The hybrid radio access network 1 further comprises the non-terrestric telecommunication network, NTN, 3 and an application programming interface, API, 10 connecting the radio access network 2 to the non-terrestric telecommunication network 3. The non-terrestric telecommunication network 3 preferably is configured as a satellite network comprising a satellite core network 30, a satellite gateway 32, a satellite backhaul 31 connecting the satellite gateway 32 to the satellite core network 30, a plurality of satellites 34 and a satellite fronthaul 33 connecting each satellite 34 to the satellite gateway 32.

The hybrid radio access network 1 is configured to carry out the following inventive method. The hybrid radio access network 1 is operated as follows.

The control module 240 of the centralized unit, CU, 24 of the radio access network, RAN, 1 determines a service demand of the mobile device 4 connected to the radio unit, RU, 20 of the radio access network 1 network and registered with the control module 240.

Determining the service demand comprises receiving current UE metrics 50 from the mobile device 4 and/or predict future UE metrics 51, generating a service demand profile 5 of the mobile device 4 depending on the received current UE metrics 50 and the predicted future UE metrics 51 and deriving the service demand from the generated service demand profile 5. The future UE metrics 51 may be predicted depending on historic data concerning the mobile device 4, a time of day, a position of the mobile device 4, a user of the mobile device 4 and/or an event related to the mobile device 4.

The control module 240 determines a service capacity of the non-terrestric telecommunication network, NTN, 3 connected to the radio access network 2 via the application programming interface, API, 10 and connected to by the mobile device 4.

Determining the service capacity may comprise verifying the mobile device 4 to be connected to the non-terrestric telecommunication network 3, receiving NTN metrics 60 from the non-terrestric telecommunication network 3, the NTN metrics 60 comprising a bandwidth, a throughput, a latency, a jitter and/or an error rate, generating a service capacity profile 6 of the non-terrestric telecommunication network 3 depending on the received NTN metrics 60 and deriving the service capacity from the generated service capacity profile 6.

The control module 240 causes the radio unit 20 and/or the distributed unit, DU, 22 of the radio access network 2 to shut down and the mobile device 4 to be transferred to the non-terrestric telecommunication network 3 when the determined service capacity exceeds the determined service demand.

The control module 240 preferably causes the radio unit 20 and/or the distributed unit 22 to restart and the mobile device 4 to be transferred to the radio access network 2 when the determined service demand exceeds the determined service capacity. The control module 240 may transmit a message 7 to the mobile device 4, the message 7 indicating an estimated time remaining until the radio unit 20 and/or the distributed unit 22 have restarted.

Performing a handover procedure or a roaming procedure may comprise transferring the mobile device 4. Causing the mobile device 4 to be transferred may comprise transmitting a transfer request to the mobile device 4 as a cell broadcast.

It is preferred that the control module 240 iteratively determines the service capacity and the service demand. The control module 240 still preferably determines service demands of a plurality of mobile devices 4 connected to the radio unit 20 or a plurality of radio units 20 and registered with the control module 240.

### Reference Numerals

- 1: hybrid radio access network
- 10: application programming interface, API
- 2: radio access network, RAN
- 20: radio unit, RU
- 21: fronthaul
- 22: distributed unit, DU
- 23: midhaul
- 24: centralized unit, CU
- 240: control module
- 2400: artificial neural network
- 25: backhaul
- 26: core network
- 3: non-terrestric telecommunication network, NTN
- 30: satellite core network
- 31: satellite backhaul
- 32: satellite gateway
- 33: satellite fronthaul
- 34: satellite
- 4: mobile device
- 5: service demand profile
- 50: current UE metrics
- 51: future UE metrics
- 6: service capacity profile
- 60: NTN metrics
- 7: message

## Claims

1. A method for operating a radio access network (2), wherein
- a control module (240) of a centralized unit, CU, (24) of a radio access network, RAN, (2) determines a service demand of a mobile device (4) connected to a radio unit, RU, (20) of the radio access network (2) and registered with the control module (240);
- the control module (240) determines a service capacity of a non-terrestric telecommunication network, NTN, (3) connected to the radio access network (2) via an application programming interface, API, (10) and connected to by the mobile device (4);
- the control module (240) causes the radio unit (20) and/or a distributed unit, DU, (22) of the radio access network (2) to shut down and the mobile device (4) to be transferred to the non-terrestric telecommunication network (3) when the determined service capacity exceeds the determined service demand.

2. The method according to claim 1, wherein determining the service capacity comprises verifying the mobile device (4) to be connected to the non-terrestric telecommunication network (3), receiving NTN metrics (60) from the non-terrestric telecommunication network (3), the NTN metrics (60) comprising a bandwidth, a throughput, a latency, a jitter and/or an error rate, generating a service capacity profile (6) of the non-terrestric telecommunication network (3) depending on the received NTN metrics (60) and deriving the service capacity from the generated service capacity profile (6).

3. The method according to claim 1 or 2, wherein determining the service demand comprises receiving current UE metrics (50) from the mobile device (4) or from the radio access network (2) and/or predict future UE metrics (51), generating a service demand profile (5) of the mobile device (4) depending on the received current UE metrics (50) and the predicted future UE metrics (51) and deriving the service demand from the generated service demand profile (5).

4. The method according to claim 3, wherein the future UE metrics (51) are predicted depending on historic data concerning the mobile device (4), a time of day, a position of the mobile device (4), a user of the mobile device (4) and/or an event related to the mobile device (4).

5. The method according to one of claims 1 to 4, wherein the control module (240) causes the radio unit (20) and/or the distributed unit (22) to restart and the mobile device (4) to be transferred to the radio access network (2) when the determined service demand exceeds the determined service capacity.

6. The method according to claim 5, wherein the control module (240) transmits a message (7) to the mobile device (4), the message (7) indicating an estimated time remaining until the radio unit (20) and/or the distributed unit (22) have restarted.

7. The method according to one of claims 1 to 6, wherein the control module (240) iteratively determines the service capacity and the service demand.

8. The method according to one of claims 1 to 7, wherein the control module (240) determines service demands of a plurality of mobile devices (4) connected to the radio unit (20) or a plurality of radio units (20) and registered with the control module (240).

9. The method according to one of claims 1 to 8, wherein causing the mobile device (4) to be transferred comprises transmitting a transfer request to the mobile device (4) as a cell broadcast.

10. The method according to one of claims 1 to 9, wherein performing a handover procedure or a roaming procedure comprises transferring the mobile device (4).

11. A hybrid radio access network, hybrid RAN, (1) comprising
- a radio access network (2) with a distributed unit, DU, (22), a radio unit, RU, (20) and a centralized unit, CU, (24) with a control module (240);
- a non-terrestric telecommunication network, NTN, (3) and
- an application programming interface, API, (10) connecting the radio access network (2) to the non-terrestric telecommunication network (3) and being configured to carry out a method according to one of claims 1 to 10.

12. The hybrid radio access network according to claim 11, wherein the non-terrestric telecommunication network (3) is configured as a satellite network comprising a satellite core network (30), a satellite gateway (32), a satellite backhaul (31) connecting the satellite gateway (32) to the satellite core network (30), a plurality of satellites (34) and a satellite fronthaul (33) connecting each satellite (34) to the satellite gateway (32) and/or wherein the radio access network (2) further comprises a fronthaul (21) connecting the radio unit (20) to the distributed unit (22), a midhaul (23) connecting the distributed unit (22) to the centralized unit (24), a core network (26) and/or a backhaul (25), the backhaul (25) connecting the centralized unit (24) to the core network (26).

13. The hybrid radio access network according to claim 11 or 12, wherein the control module (240) comprises an artificial neural network (2400) for predicting future UE metrics of a mobile device (4) and/or a service capacity of the non-terrestric telecommunication network (3).

14. The hybrid radio access network according to one of claims 11 to 13, wherein the radio unit (20) comprises a 5G base transceiver station, BTS, or a stack of a plurality of base transceiver stations of different generations.

15. A computer program product, comprising a digital storage medium storing a program code, the program code causing a computing device to carry out a method according to one of claims 1 to 10 as the control module (240) together with the radio unit (20), the distributed unit (22), the non-terrestric telecommunication network (3) and a mobile device (4) when being executed by a processor of the computing device.
